# EUROPEAN PATENT APPLICATION

(11) **EP 1 772 771 A1**
(43) Date of publication of application: **11.04.2007**
(21) Application number: 05766211.6
(22) Date of filing: 15.07.2005
(51) Int. Cl.: G02F 1/37, H01S 3/06

(54) **COHERENT LIGHT SOURCE AND OPTICAL DEVICE USING THE SAME**

(30) Priority: 15.07.2004 JP 2004208136
(71) Applicant: Matsushita Electric Industrial Co., Ltd., Osaka Kadoma 571-8501 (JP)
(72) Inventor: MIZUUCHI, Kiminori, Mats. El. Ind. Co., IPROC, IP, Chuo-ku, Osaka-shi, Osaka 540-6319 (JP); YAMAMOTO, Kazuhisa, Mats. El. Ind. Co., IPROC IP, Chuo-ku, Osaka-shi, Osaka 540-6319 (JP)
(74) Representative: Eisenführ, Speiser & Partner
(86) International application number: PCT/JP2005/013141
(87) International publication number: WO 2006/006701

(57) **Abstract**

There is provided a coherent light source including: a light source unit having a dope fiber and emitting a light of first wavelength and a light of second wavelength by the dope fiber; and a wavelength conversion element unit having a first wavelength conversion element for receiving the light of the first wavelength and emitting a light having a wavelength shorter than the first wavelength.

## Description

### Technical Field

The present invention relates to a coherent light source using a wavelength conversion element and an optical apparatus using the same.

### Background Art

As a high-output laser light source, a solid fiber laser has been developed. The laser light source using a laser amplifier with a doped fiber, having a high output and easy to improve beam quality, has found wider applications as the high-output laser light source. The fiber laser, with a double clad structure, can amplify an excitation pump light source in multiple stages, and therefore can produce a high output. Further, by confining the laser light in a core unit, the single-mode oscillation becomes possible, and a high-output laser light can be realized while maintaining a high beam quality. The oscillation of the fiber laser is in an infrared light region, and as an application to the visible region, shortening of the wavelength of the oscillation light by wavelength conversion is reported. Currently, a structure in which Yb, Nd, Er or Yb/Er is added to the core unit of the fiber is realized for laser oscillation using the fiber laser or the fiber amplifier. With regard to the oscillation wavelength, oscillation is possible in a neighborhood of 1030 to 1100 nm for the Yb-doped fiber, in a neighborhood of 1060 nm for the Nd-doped fiber, and in a neighborhood of 1550 nm for the Er or Er/Yb fiber. As a light source for outputting the visible light, a light source having a configuration for converting the output of the Yb- or Nd-doped fiber into the second harmonic and generating green light of a wavelength in a neighborhood of 530 nm or a configuration for converting the output of the Er- or Er/Yb-doped fiber into the second harmonic and generating near-infrared light in a neighborhood of 770 nm has been realized.

On the other hand, generation of blue light using the fiber laser is also under study. Patent Document 1 (JP-A-2004-503098) discloses a configuration for generating blue light in a neighborhood of 455 nm by converting a fundamental wave of a light of 910 nm generated by the Nd-doped fiber into the wavelength of the second harmonic.

As described above, the laser oscillation using the fiber amplifier is capable of high-efficiency, high-output laser oscillation. Under the circumstances, however, direct oscillation of blue light with the fiber is difficult. For this reason, as described in Patent Document 1, shortening of the wavelength of an emitted light by generating the higher harmonic is being studied. If a light of the wavelength in a neighborhood of 900 nm is generated by the fiber laser, blue light can be output by generation of the second harmonic.
Patent Document 1: JP-A-2004-503098

### Disclosure of Invention

### Problem to be solved by the invention

The light of the wavelength in a neighborhood of 900 nm, however, is absorbed in the laser medium so greatly that the laser light source using a fiber having a large interaction length, like a solid laser, is low in the efficiency of generating the light in a neighborhood of 900 nm, and it is difficult to increase the efficiency and output of the light source. Thus, a light source of W class with high efficiency is difficult to be realized.

The present invention provides a coherent light source for emitting light in a blue light region with high efficiency using light of higher efficiency in generation with a fiber laser than the light in a neighborhood of 900 nm.

Further, the present invention provides a coherent light source capable of generating blue light and green light at the same time.

Furthermore, the present invention provides a coherent light source capable of generating light in three colors including red light, blue light and green light at the same time.

### Means for solving problems

In one aspect of the invention, there is provided a coherent light source which includes: a light source unit having a doped fiber which emits light of a first wavelength and light of a second wavelength from the doped fiber; and a wavelength conversion element unit having a first wavelength conversion element which receives the light of the first wavelength and emits a light of a shorter wavelength than the first wavelength.

In one aspect of the invention, the first wavelength conversion element desirably receives the light of the first wavelength and emits a second harmonic of the light of the first wavelength.

In one aspect of the invention, the wavelength conversion element unit desirably further includes a second wavelength conversion element which receives the second harmonic of the light of the first wavelength and the light of the second wavelength and emits a light having a sum frequency of the second harmonic and the light of the second wavelength.

In one aspect of the invention, the light source unit desirably has a first doped fiber containing either Er or Er and Yb and a second doped fiber containing Yb.

In one aspect of the invention, the first wavelength is desirably approximately 1540 nm; the second wavelength is desirably approximately 1080 nm; and the wavelength conversion element unit desirably receives the light of the first wavelength and the light of the second wavelength and emits a light of a wavelength of approximately 450 nm.

In one aspect of the invention, the wavelength conversion element unit desirably further includes a third wavelength conversion element which receives the light of the second wavelength and emits a second harmonic of the light of the second wavelength.

In one aspect of the invention, the wavelength conversion element unit desirably further includes a fourth wavelength conversion element which receives the light of the first wavelength and the light of the second wavelength and emits a light having a sum frequency of the first wavelength and the second wavelength.

In one aspect of the invention, desirably, the first wavelength conversion element receives at least a part of the light of the first wavelength; the second wavelength conversion element receives at least a part of a light emitted from the first wavelength conversion element and at least a part of the light of the second wavelength; and the third wavelength conversion element receives at least a part of the light of the second wavelength.

In one aspect of the invention, desirably, the first wavelength conversion element receives at least a part of the light of the first wavelength; the second wavelength conversion element receives at least a part of a light emitted from the first wavelength conversion element and at least a part of the light of the second wavelength; the third wavelength conversion element receives at least a part of the light of the second wavelength; and the fourth wavelength conversion element receives at least a part of the light of the first wavelength and at least a part of the light of the second wavelength.

In one aspect of the invention, at least one of the first wavelength conversion element and the second wavelength conversion element desirably includes at least one of Mg-doped LiNbO3, Mg-doped LiTaO3, and KTiOPO4, Mg-doped LiNbO3 of stoichiometric composition and Mg-doped LiTaO3 of stoichiometric composition having a periodic polarization inversion structure.

In one aspect of the invention, the light source unit desirably further includes a master light source that generates a light entering the doped fiber.

In one aspect of the invention, the light source unit is desirably capable of being connected with a drive unit that supplies pulse-like energy for driving the light source unit.

In one aspect of the invention, desirably, the light source unit has two doped fibers and two master light sources; and the two master light sources are capable of being connected with the drive unit and operate while receiving supplies of pulse-like energy having same period and same phase.

In one aspect of the invention, the doped fiber desirably contains at least one of the elements of Yb, Er, Er/Yb, Nd, Pr, Cr, Ti, V and Ho.

In one aspect of the invention, the first wavelength conversion element and the second wavelength conversion element desirably have a single nonlinear optical crystal structure.

In one aspect of the invention, the light source unit desirably has a single doped fiber.

In one aspect of the invention, the doped fiber is desirably an Er/Yb-doped fiber.

In one aspect of the invention, at least one of the two master light sources is desirably a semiconductor laser light source.

In one aspect of the invention, the coherent light source desirably further includes an optical fiber which receives light emitted from the wavelength conversion element unit.

In one aspect of the invention, there is provided an optical apparatus including: a light source unit having a doped fiber which emits a light of a first wavelength and a light of a second wavelength from the doped fiber, and a wavelength conversion element unit having a first wavelength conversion element which receives the light of the first wavelength and emits a light of a shorter wavelength than the first wavelength; and
an image conversion unit which receives the light emitted from the coherent light source and controls two-dimensional strength distribution of the light emitted from said coherent light source.

### Effect of the invention

According to the invention, a coherent light source of blue light region using a fiber laser is realized. The coherent light source is high in efficiency and can produce a high output.

### Brief Description of Drawings

Fig. 1 is a configuration diagram of an example of a coherent light source according to a first embodiment of the invention;
Fig. 2 is a configuration diagram of a doped fiber having a Bragg grating;
Fig. 3 is a configuration diagram of an example of the coherent light source according to the first embodiment of the invention;
Fig. 4 is a configuration diagram of an example of the coherent light source according to the first embodiment of the invention;
Fig. 5 is a configuration diagram of an example of the coherent light source according to the first embodiment of the invention;
Fig. 6 is a configuration diagram of an example of a coherent light source according to a second embodiment of the invention;
Fig. 7A is a configuration diagram of an example of the coherent light source according to the second embodiment of the invention;
Fig. 7B is a configuration diagram of an example of the coherent light source according to the second embodiment of the invention;
Fig. 8 is a configuration diagram of an example of the coherent light source according to the second embodiment of the invention;
Fig. 9 is a configuration diagram of an example of the coherent light source according to the second embodiment of the invention;
Fig. 10A is a diagram of an example of a drive signal of a light source unit;
Fig. 10B is a diagram of an example of connection between a drive power supply and the light source unit;
Fig. 11 is a configuration diagram of an example of a coherent light source according to a third embodiment of the invention;
Fig. 12A is a configuration diagram of an example of the coherent light source according to the third embodiment of the invention;
Fig. 12B is a configuration diagram of an example of the coherent light source according to the third embodiment of the invention;
Fig. 13 is a configuration diagram of an example of the coherent light source according to the third embodiment of the invention;
Fig. 14 is a configuration diagram of an example of the coherent light source according to the third embodiment of the invention;
Fig. 15 is a configuration diagram of an example of an optical apparatus according to a fourth embodiment of the invention;
Fig. 16 is a configuration diagram of an example of the optical apparatus according to the fourth embodiment of the invention;
Fig. 17 is a configuration diagram of an example of the optical apparatus according to the fourth embodiment of the invention; and
Fig. 18 is a configuration diagram of an example of a coherent light source suitable for the optical apparatus according to the fourth embodiment of the invention.

### Explanations of letters or numerals

- 101, 103:: master light source
- 102, 104, 1002:: pump light source
- 105, 106, 204, 301, 302:: doped fiber
- 107, 303, 401, 403:: SHG element
- 501, 505, 511, 517:: SHG element
- 108, 402, 406, 503:: SFG element
- 507, 513, 515:: SFG element
- 109a:: pulse drive power supply
- 109b:: drive power supply
- 151:: Bragg grating
- 801:: coherent light source
- 802:: collimate optical system
- 803, 907:: integrator optical system
- 804:: diffusion plate
- 805, 909:: liquid crystal panel
- 806:: screen
- 807:: projection lens
- 901:: coherent light source
- 902, 903:: mirror
- 905:: screen
- 911:: associated wave prism
- 913r, 913g, 913b, 915:: lens
- 2002:: wave plate
- 3007:: nonlinear fiber

### Best Modes for Carrying Out the Invention

In the fiber laser, the light source for generating the laser light in a neighborhood of 900 nm and generating the light of blue color by wavelength conversion, like the solid laser, is low in the efficiency of generating the light in a neighborhood of 900 nm, and it is difficult to achieve high efficiency and a high output. We provides a blue light source using a fiber laser for emitting the light of the wavelength in a neighborhood of 1080 nm and 1540 nm having an advanced high output capability.

The light source according to an embodiment of the invention has an optical fiber and is a light source (coherent light source) for generating the coherent light in the blue light region. This light source has a high-output fiber laser and further, has a configuration in which the light of the wavelength in the blue light region can be emitted with high efficiency by the wavelength conversion element for converting the wavelength of the light emitted from the fiber laser.

Also, the light source according to an embodiment of the invention has a configuration capable of producing a high output of the blue light source, generating the green light and the blue light at the same time, and generating the red light, the green light and the blue light at the same time.

Further, the display device according to an embodiment of the invention is a display device using the light source according to the invention.

### (First embodiment)

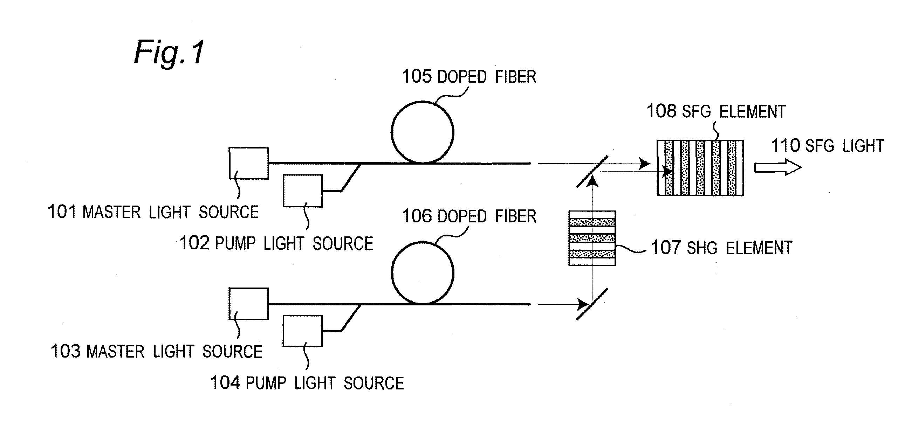

Fig. 1 is a diagram of the configuration of a coherent light source according to a first embodiment of the invention. With reference to Fig. 1, the configuration and operation of the coherent light source according to this embodiment are explained briefly. A doped fiber 105 making up a fiber amplifier emits the light of the wavelength of lambda_1 emitted from a master light source 101 and amplified by a pump light source 102 and a doped fiber 105. A doped fiber 106 making up the other fiber amplifier emits the light of the wavelength of lambda_2 emitted from a master light source 103 and amplified by a pump light source 104 and a doped fiber 106. According to the first embodiment, the master light sources 101 and 103, the pump light sources 102 and 104, and the doped fibers 105 and 106 constitute a light source unit. Also in other embodiments, a light source unit is similarly made up of master light sources, pump light sources, and doped fibers. The light of the wavelength lambda_2 emitted from the doped fiber 106 is converted into the SHG light (second harmonic) having the wavelength lambda_2/2 (=lambda_3) by a SHG (second harmonic generation) element 107. The light of the wavelength lambda_1 emitted from the fiber amplifier 105 and the SHG light of the wavelength lambda_3 emitted from the SHG element 107 enter a sum frequency generation (SFG) element 108 and are converted into the light having the sum frequency. The wavelength lambda_4 of the SFG light 110 constituting the light having the sum frequency converted and generated by the element 108 is lambda_4 = (lambda_1 x lambda_3)/(lambda_1 + lambda_3) = (lambda_ 1 x lambda_2)/(2 x lambda_1 + lambda_2). The SFG element 108, therefore, emits the SFG light 110 having the wavelength lambda_4. In such a manner that this wavelength lambda_4 is contained in the blue light region, the wavelength lambda_1 and lambda_2 of the light emitted from the doped fibers 105 and 106 are selected and the SHG element 107 and the SFG element 108 are designed. As a result, the blue light can be generated by the doped fibers 105, 106 making up fiber amplifiers and the SHG element 107 and the SFG element 108 constituting the wavelength conversion elements. According to the first embodiment, the SHG element 107 and the SFG element 108 make up a wavelength conversion element unit. Also in other embodiments, a wavelength conversion element unit is made up of the SFG element and the SHG element. Incidentally, the SFG element is an element which is entered by the light of the wavelength lambda_a and the light of the wavelength lambda_b and emits the light of the wavelength lambda_c satisfying the relation lambda_c^(-1) = lambda_a^(-1) + lambda_b^(-1). The SHG element is a wavelength conversion element for emitting the light of lambda_c = lambda_a/2 by the entrance of the light of the wavelength lambda_a in a case where lambda_a equals lambda_b in the foregoing description of the SFG element. The principle of the coherent light source according to the invention is explained in detail below.

The doped fiber 105 contained in the first fiber amplifier has a Yb-doped fiber. This doped fiber 105 can generate the light of the wavelength of about 1030 to 1100 nm. The doped fiber 106 constituting the second fiber amplifier, on the other hand, has an Er- or Er/Yb-doped fiber. This doped fiber 106 can generate the light of the wavelength in a neighborhood of 1540 nm. The SHG element 107 is an element that can convert the light of the wavelength in a neighborhood of 1540 nm into the SHG light and can generate the SHG light in a neighborhood of 770 nm.

The light having the sum frequency of the aforementioned two light (the light of wavelength lambda_1 and wavelength lambda_3) is generated by the SFG element 108, so that the blue light of the wavelength in a neighborhood of 440 nm to 460 nm contained in the blue light region can be generated.

The fiber laser light source can be configured of a pump light source and doped fibers 105 and 106 constituting fiber resonators by forming a mirror on each end surface of the fibers or in such a manner that using the master light sources 101 and 103 and the pump light sources 102 and 104, the light emitted from the master light sources 101 and 103 are amplified by the pump light sources 102 and the pump light source 104 and the doped fibers 105 and 106 making up the fiber amplifiers.

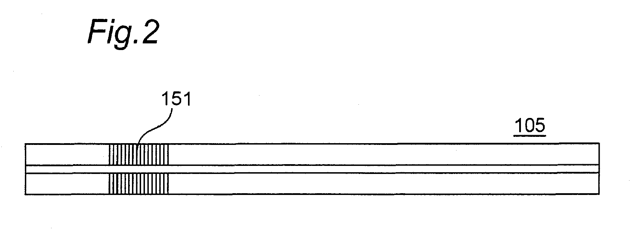

In the former configuration using the resonators, as shown in Fig. 2, a Bragg grating 151 having a periodic grating structure can be used as the doped fiber 105 (and 106). The Bragg grating 151 is desirably designed to reflect the light of a wide range of wavelength of about several nm taking the variations in the phase matching wavelength of the wavelength conversion element into consideration. In a case where the band is narrowed by grating, etc., it may be difficult to narrow the band of the oscillation wavelength of the laser due to Raman scattering or the like at the time of high output. Generally, the tolerance of the phase matching wavelength of the wavelength conversion element is narrow. In a case where the fiber is configured as a laser resonator, therefore, the light entering the wavelength conversion element has a wide wavelength band and therefore the conversion efficiency is greatly reduced. In view of this point, the fiber amplifier is suitably configured in such a manner that the master laser emitted from the master light sources 101 and 103 is amplified by the pump light sources 102 and 104 and the doped fibers 105 and 106. Also, the master light sources 101 and 103 are suitably configured of a semiconductor laser such as the DBR laser or the DFB laser. In these semiconductor lasers, the oscillation wavelengths are fixed by the grating configured in the lasers, and therefore they can be accurately tuned to the phase matching wavelength of the wavelength conversion element. Also, in a case where the laser light is amplified by the fiber amplifier, the increase (broadening) of the wavelength spectrum due to the nonlinear effect of the fiber can be suppressed, and therefore the highly efficient wavelength conversion is made possible.

The output of the semiconductor laser such as the DFB or DBR laser can be modulated at high speed, thereby leading to the advantage that the light converted in wavelength by the fiber amplifier and the wavelength conversion element can be modulated at high speed. In a case where the laser light of the master light sources 101 and 103 entering the doped fibers 105 and 106 is pulse driven, the Q switch operation is made possible and the pulse light having a high peak value can be generated. The SHG and SFG wavelength conversion elements 107 and 108 utilize the nonlinear optical effect. By increasing the power strength, therefore, the conversion efficiency is remarkably increased. The use of the peak power high in peak value, therefore, advantageously improves the conversion efficiency by the order of several digits as compared with the normal CW light. The semiconductor laser can be advantageously used as a light source to improve the conversion efficiency by the output modulation and the Q switch operation.

In a case where the semiconductor laser is used, care must be taken in several points.

In one point, in a case where the semiconductor laser is modulated, the chirping with the wavelength changing occurred at the same time as the output modulation is desirably suppressed. In a case where the chirping occurs, the oscillation wavelength of the laser light is deviated from the tolerance of the phase matching wavelength of the SFG element 107 and the SHG element 108, thereby often causing the problem of reduced conversion efficiency and the distortion of the output modulation waveform. For preventing this, the DBR laser having the three-electrode structure is desirably used as the laser light source. By configuring the DBR laser of three electrodes including a drive electrode, a DBR electrode, and a phase electrode and applying the modulation waveform input to the drive electrode portion and the modulation waveform input to the phase electrode portion as an output modulation at the same time, the heat generated by current injection into the semiconductor laser can be offset and the chirping of the laser can be prevented. Application of this configuration to the pump light sources 102 and 104 included in the fiber amplifier can suppress the chirping of the laser light emitted from the doped fibers 105 and 106 and realize the highly efficient wavelength conversion with the SHG element 107 and the SFG element 108 making up the wavelength conversion elements.

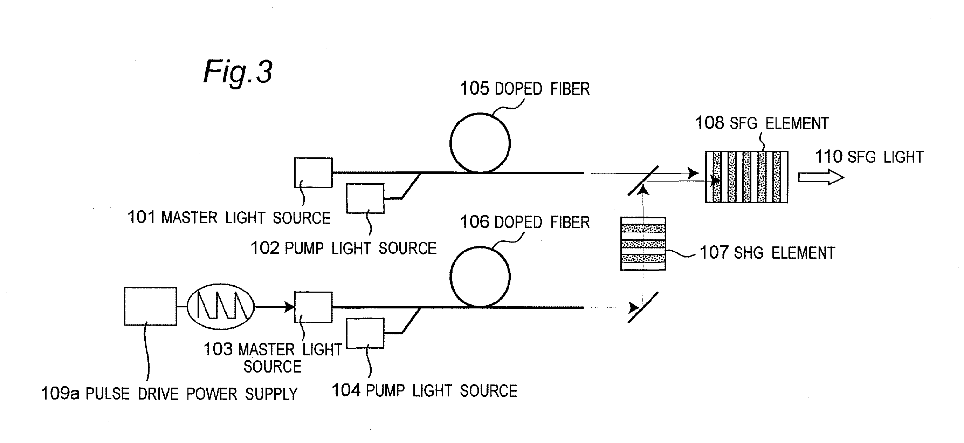

Another problem is that accurate pulse waveform matching is required at the time of Q switch operation by a pulse driving of the master light sources 101 and 103. With reference to Fig. 3, a method of the pulse driving of the fiber amplifier is explained. The conversion efficiency can be improved by generating a pulse-like output of the master light source 103 with the power supply 109 for driving the master power supply 103 as a pulse drive power supply. In such a case, however, the Er or Er/Yb lasers 103, 104, and 106 are desirably pulse driven. The reason is that the conversion efficiency of the wavelength conversion element is inversely proportional to the cube of the wavelength of the fundamental wave. As a light source generating the fundamental wave, the Er or Er/Yb lasers 103, 104 and 106 have the longest wavelength of 1540 nm, and therefore the conversion efficiency thereof is lowest among the light sources. To improve this, the light source generating the fundamental wave is pulse driven thereby to effectively improve the conversion efficiency. Specifically, the conversion efficiency can be improved most effectively by a pulse driving of the light source having the longest wavelength. The conversion efficiency is improved by the pulse driving of the master light source 103 entering the doped fiber 106 constituting the Er or Er/Yb fiber amplifier.

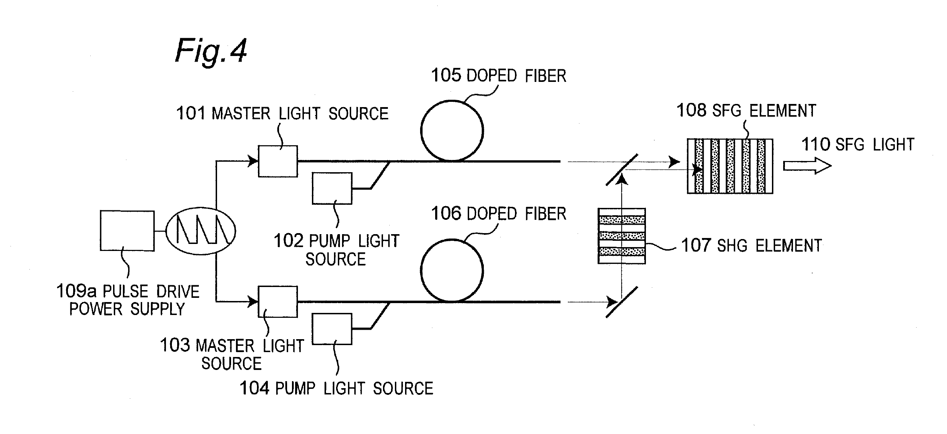

Further, by a pulse driving of the two lights entering the SFG element 108 to improve the efficiency of the SFG element 108, higher conversion efficiency can be realized. Unless the pulse lights emitted from the doped fibers 105 and 106 making up the sources of the two lights entering the SFG element 108 are temporally synchronized with each other, however, the peaks of the two pulse lights are not superposed in the SFG element 108, and the high efficiency cannot be attained. By referring to Fig. 4, a configuration for a pulse driving of both the two master light sources 101 and 103 is shown. The master light sources 101 and 103 are driven by the same pulse drive power supply 109a or the synchronized pulse drive power supplies, and therefore, the pulse lights emitted from the doped fibers 105 and 106 are temporally synchronized with each other. The configuration shown in Fig. 4 makes possible the control operation in which the pulse oscillations of the two master light sources 101 and 103 are synchronized by the single pulse drive power supply 109a and the pulses of light are generated simultaneously from the doped fibers 105 and 106.

The SHG element 107 and the SFG element 108 are suitably wavelength conversion elements each of which includes a nonlinear optical crystal having a periodic polarization inversion structure. As a wavelength conversion element having the polarization inversion structure, KTiOPO4, LiNbO3, LiTaO3, Mg-doped LiNbO3 or LiTaO3, or stoichiometric LiNbO3 or LiTaO3 is desirable. These crystals have high nonlinear constants and therefore make possible a highly efficient wavelength conversion.

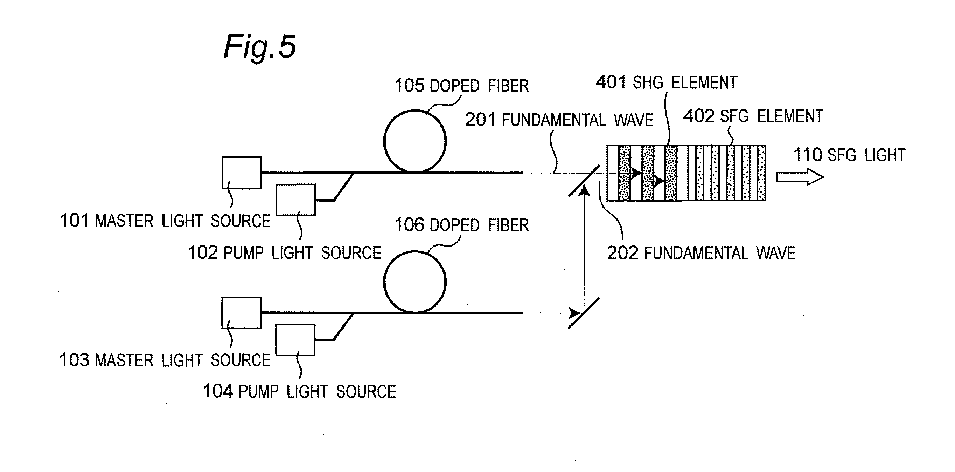

Also, the crystals have the advantage that the phase matching wavelength can be freely designed by changing its periodic structure. By utilizing this feature, the blue light can be generated by a single optical crystal. Fig. 5 is a diagram of a structure of a light source according to this embodiment having a wavelength conversion element monolithically composing the SHG element 401 and SFG element 402. By designing the period of polarization inversion, the SHG element 401 and the SFG element 402 can be formed on the same crystalline. As a crystal making up the elements 401 and 402, Mg-doped LiNbO3 can be used. From the doped fiber 106 making up a light source, for example, the fundamental wave 202 having the wavelength of 1540 nm is emitted, while the fundamental wave 201 having the wavelength of 1080 nm is emitted from the doped fiber 105. In this case, the wavelengths of these fundamental waves 201 and 202 are determined by the oscillation wavelengths of the master light sources 101 and 103, and the oscillable wavelength is not limited to the illustrated wavelength. In this example, the SHG element 401 making up one of the wavelength conversion elements includes a polarization inversion structure having the period of 27.2 micrometers, and the SFG element 402 includes a polarization inversion structure having the period of 4.1 micrometers. These polarization inversion structures having two different periods are formed in one Mg-doped LiNbO3 crystal. The SHG element 401 converts the light (fundamental wave 202) of 1540 nm into the SHG light of 770 nm. Then, the SFG element 402 generates the blue light of the wavelength of 450 nm making up the light having the sum frequency of the SHG light of 770 nm and the light (fundamental wave 201) of 1080 nm. Also, the SHG element 401 and the SFG element 402 formed on a single crystal contribute to simplification and size reduction of the light source.

Incidentally, although the configuration according to the invention uses the semiconductor laser as the master light source 101 and 103, a fiber laser or a solid laser light source can be used as a master light source.

In the configuration according to this embodiment, the two light sources include the fiber amplifiers 102, 104, 105, and 106. Nevertheless a solid laser light source can be used. Also, a solid laser light source or a semiconductor laser can be used as one or both of the laser light sources. It is possible, for example, to generate the blue light of 430 nm by using a semiconductor laser generating the light of the wavelength of 980 nm and a fiber laser light source of 1550 nm, converting the light emitted from the fiber laser light source (converting the light wavelength to one half of the original one) and generating the sum frequency of the SHG light of 775 nm and the fundamental wave of 980 nm. The semiconductor laser light source can be reduced in size, thereby effectively reducing the size and cost of the coherent light source according to the invention.

Although the configuration according to this embodiment includes a fiber laser as a laser amplifier, a semiconductor amplifier can be used in place of the fiber laser. The semiconductor amplifier can be excited by a current and therefore can effectively reduce the size of the light source.

The use of the Er or Er/Yb-doped fiber as the doped fiber 106 or the use of the Yb-doped fiber as the doped fiber 105 making up a fiber amplifier makes it possible to generate the blue light in a neighborhood of 380 to 410 nm.

The fiber amplifier can be realized by a configuration containing any one of ions of the Nd, Pr, Cr, Ti, V and Ho elements other than the aforementioned laser. In a case where the Nd-doped fiber is used, the light emission in a neighborhood of 1060 nm is facilitated. Also, with regard to the aforementioned ions other than Nd, light sources of different wavelength can be realized.

### (Second embodiment)

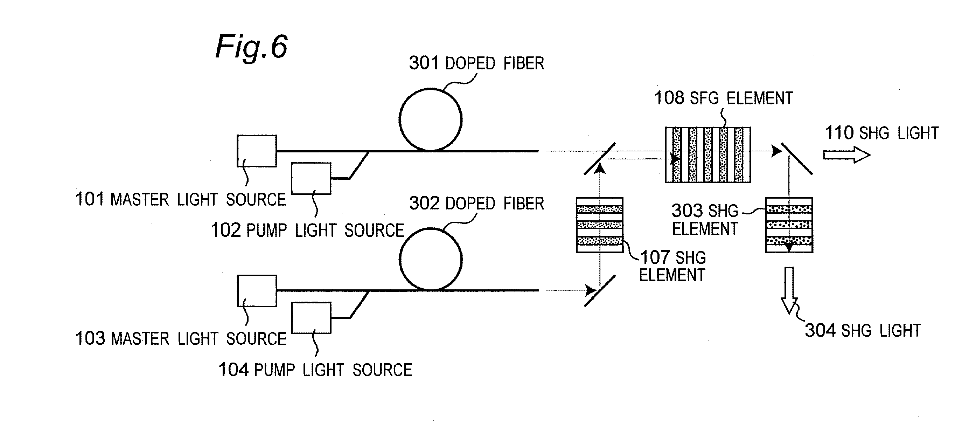

The coherent light source according to this embodiment has a configuration capable of generating the coherent light having peaks in a plurality of wavelength regions (two wavelength regions of blue and green, for example) at the same time. Fig. 6 is a diagram of the configuration of the coherent light source according to this embodiment. The light of the wavelength of 1540 nm emitted from the doped fiber 302 making up an Er/Yb doped fiber is converted into the SHG light of the wavelength of 770 nm by the SHG element 107. The light of the wavelength of 1080 nm and the SHG light of the wavelength of 770 nm emitted from the doped fiber 301 making up the Yb-doped fiber are converted into the SFG light 110 constituting the blue light of the wavelength of 450 nm by the SFG element 108. Further, the light of the wavelength of 1080 nm emitted without being converted by the SFG element 108 is separated and converted into the SHG light 304 constituting the green light of the wavelength of 540 nm by the second SHG element 303. The coherent light source according to this embodiment can generate the green light (for example, the light of the wavelength of 540 nm) and the blue light (for example, the light of the wavelength of 450 nm) at the same time. The coherent light source according to this embodiment generates the SHG light 304 using the fundamental wave having the wavelength of 1080 nm not converted by the SFG element 108. As a result, the utilization factor of the light sources as a whole can be improved and the power consumption reduced. Also, the blue light and the green light can be generated at the same time by a single light source, and therefore the light source can be reduced in size and simplified.

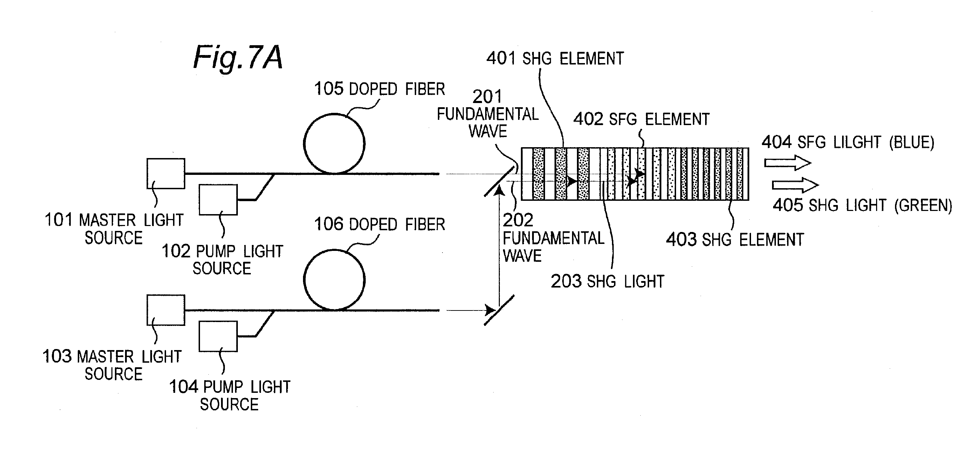

Further, as shown in Fig. 7A, the SHG element 401, the SFG element 402 and the SHG element 403 can be integrated (into a monolithic element) to realize a compact light source. In the wavelength conversion elements 401, 402, and 403, the polarization inversion structure having the period of 27.2 micrometers may be formed in the portion represented by the SHG element 401 of the fundamental wave 202 having the wavelength of 1540 nm, the polarization inversion structure having the period of 4.1 micrometers in the portion represented by the SFG element 402 and the polarization inversion structure having the period of 7.3 micrometers in the portion represented by the SHG element 403 having the wavelength of 1080 nm, on the LiNbO3 crystal doped with Mg. The fundamental wave 202 is converted into the SHG light 203 by the SHG element 401, and the SHG light 203 and the fundamental wave 201 into the SFG light 404 by the SFG element 402. Further, the fundamental wave 201 is converted into the SHG light 405 by the SHG element 403. By converting the SHG elements 401, 403 and the SFG element 402 into a monolithic element, the configuration of the light source is simplified for a reduced size and cost. The free control for SFG, SHG, etc. is possible simply by designing the period of the periodic polarization inversion structure, and therefore a monolithic element can be produced very effectively.

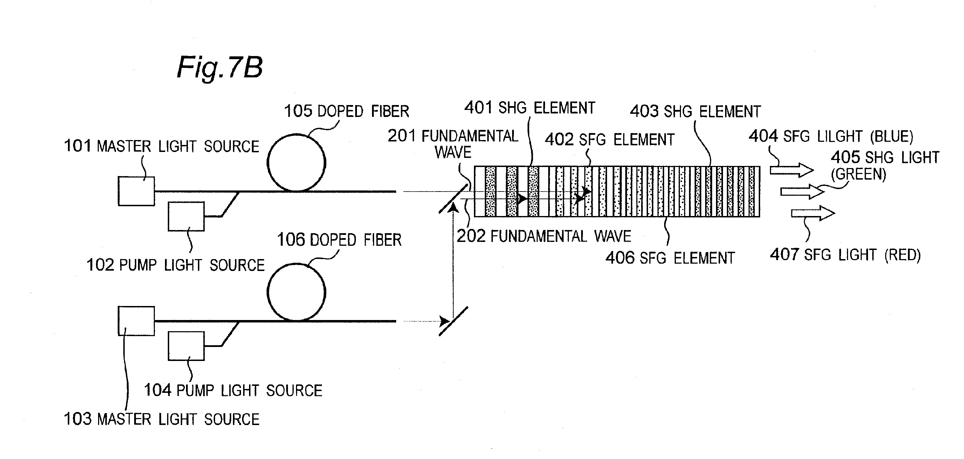

Further, the provision of the SFG element 406 making up a second sum frequency element makes it possible to generate the three wavelengths of red, blue and green at the same time. The configuration thereof is shown in Fig. 7B. The wavelength conversion element includes the SHG elements 401 and 403 and the SFG elements 402 and 406. Also, by integrating the wavelength conversion elements 401, 402, 403, and 406 constituting the wavelength conversion unit onto one substrate, the light source can be reduced in size. The wavelength conversion elements may be formed on the Mg-doped LiNbO3 crystal in such a manner that the polarization inversion structure having the period of 27.2 micrometers is formed as a portion making up the SHG element 401 of the fundamental wave 202 having the wavelength of 1540 nm, the polarization inversion structure having the period of 4.1 micrometers as a portion making up the SFG element 402, the polarization inversion structure having the period of 11.7 micrometers as a portion making up the SFG element 406 and the polarization inversion structure having the period of 7.3 micrometers as a portion making up the SHG element 403 having the wavelength of 1080 nm. The fundamental wave 202 having the wavelength of 1540 nm is converted into the SHG light 203 having the wavelength of 770 nm by the SHG element 401, and the SHG light 203 having the wavelength of 770 nm and the fundamental wave 201 having the wavelength of 1080 nm are converted into the SFG light (blue) 404 having the wavelength of 450 nm by the SFG element 402. Further, the fundamental wave 201 having the wavelength of 1080 nm is converted into the SHG light (green) 405 by the SHG element 403. Furthermore, the fundamental wave 201 having the wavelength of 1080 nm and the fundamental wave 202 having the wavelength of 1540 nm are converted into the SFG light (red) 407 having the wavelength of 635 nm by the SFG element 406. As a result, the red (R), green (G) and blue (B) can be generated at the same time. All of the wavelength of the light of the three colors generated by this light source have a high luminosity factor and are very suitable for display applications. Further, since the three colors can be generated at the same time by the two fundamental wave light sources, the utilization factor of the fundamental waves can be improved. With regard to the order of wavelength conversion, the conversion into the SHG light of 1540 nm is desirably first of all. This is because, as described above, the wavelength is longest and therefore the conversion efficiency is lowest. After that, the blue light having the sum frequency is desirably generated, followed by the generation of the red light having the sum frequency, and lastly, the green light making up the SHG light of 1080 nm is desirably generated. By the conversion in the ascending order of conversion efficiency and further conversion with the extraneous light, the utilization factor is improved, thereby making possible a high output of the light source as a whole. Also, with regard to the generation of the green light, the generation of the two sum frequencies can be stopped or at least suppressed by stopping or at least reducing the output of the light of the wavelength of 1540 nm, so that the light of 1080 nm can be used only for generation of the green light. Apart from the generation of red and blue, therefore, high output generation with green alone is also made possible. In a case where the RGB light sources are used for laser display, the luminosity factor requires the output power of green light higher than those of red and blue. The configuration according to the invention is desirable since the green light can be utilized more efficiently than the light of the other colors. As a wavelength region of the fundamental wave light source, the use of the wavelength in a neighborhood of 1550 +50 or -50 nm and the wavelength in a neighborhood of 1080 +50 or -50 nm makes possible the simultaneous generation of the RGB light. In a case where the Er-doped fiber is used, the light of the wavelength in a neighborhood of 1550 +50 or - 50 nm can be output, while in a case where the Yb-doped fiber is used, the light of the wavelength in a neighborhood of 1080 +50 or -50 nm can be output. The use of the light source in this wavelength region makes possible the generation of the light of the wavelength of 610 to 660 nm in the red region, 430 to 470 nm in the blue region and 515 to 565 nm in the green region.

Further, the wavelength of the light generated by the light sources 103, 104, and 302 is desirably 1500 to 1570 nm. The reason is that for this wavelength of 1570 nm or longer, the wavelength of the red light generated with the sum frequency by the other light sources 101, 102, and 301 having the wavelength in a neighborhood of 1060 nm increases to 640 nm or more, and therefore the luminosity factor for display application is reduced. The reduced luminosity factor increases the required power and hence the power consumption. Thus, the wavelength of red is desirably not more than 640 nm. To satisfy this condition, the wavelength of the light emitted from the light sources 103, 104, and 302 is desirably not more than 1570 nm. In a case where the wavelength of the light emitted from the light sources 103, 104, and 302 is reduced to or below 1500 nm, on the other hand, the red wavelength is reduced to or below 620 nm. With the reduction of the red wavelength to or below 620 nm, the red display range is narrowed and the color reproducibility deteriorated. In order to secure the red wavelength of not less than 620 nm, therefore, the wavelength of the light emitted from the light sources 103, 104, and 302 is desirably not less than 1500 nm. More desirably, it is 1540 to 1560 nm. The reason is that the conversion efficiency for the pump light is highest in the Er/Yb-doped fiber 302.

The wavelength of the light emitted from the light sources 101, 102, and 301, on the other hand, is desirably in the range of 1060 nm to 1090 nm. This wavelength region is where the conversion efficiency of the Yb-doped fiber laser 301 is high, and therefore, the power consumption can be reduced. More desirably, it is 1065 to 1080 nm. The use of this wavelength region makes possible high color reproducibility.

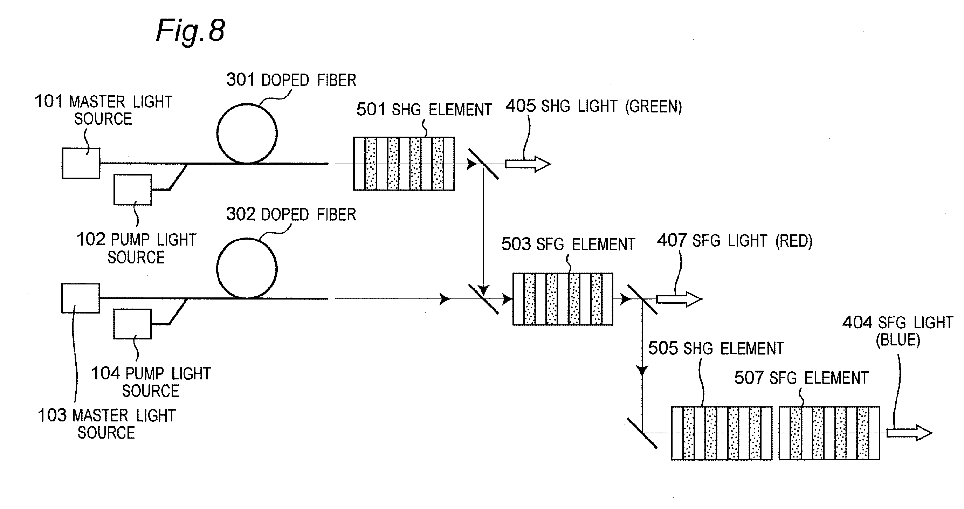

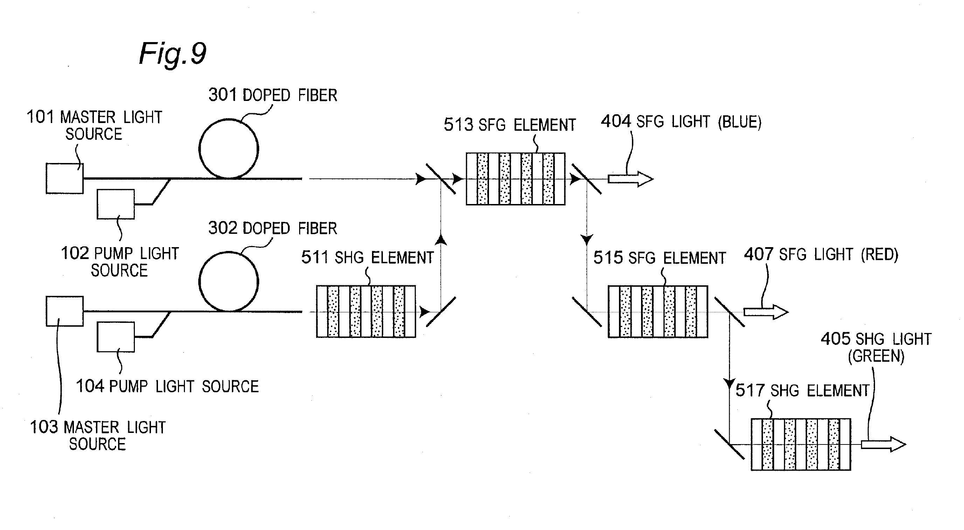

Figs. 8 and 9 show an example of the configuration of the light source capable of RGB light at the same time. In the light source shown in Fig. 8, the RGB are generated at the same time by use of the light of 1554 nm from the first light source unit 101, 102, an 301 and the light of 1084 nm from the second light source unit 103, 104, and 302.

Part of the laser light of 1084 nm is converted into green light of 542 nm by the SHG element 501, and the light of 542 nm is retrieved outside. Part of the laser light of 1554 nm is combined with the laser light of 1084 nm, and the red light having the sum frequency of 639 nm is generated by the SFG element 503. Thus, the red light is retrieved outside. Further, the light of 1554 nm is converted into the light of 777 nm by the SHG element 505, while the light of 777 nm and the light of 1084 nm are converted into a sum frequency by the SFG element 507 thereby to generate the blue light of 457 nm. This configuration can generate RGB at the same time from the two light source units.

Next, the configuration of the light source shown in Fig. 9 is explained. Part of the laser light of 1554 nm emitted from the second light source unit 103, 104, and 302 is converted into the light of 777 nm by the SHG element 511. Part of the light of 777 nm and the light of 1084 nm is converted into the light having the sum frequency of 453 nm by the SFG element 513, and the light of 453 nm is retrieved outside. Further, part of the laser light of 1084 nm and 1554 nm is converted into a sum frequency of 639 nm by the SFG element 515. Furthermore, the light of 1084 nm is converted into the green light of 542 nm by the SHG element 517.

From the viewpoint of the RGB conversion efficiency, the configuration shown in Fig. 9 is desirable. As described earlier, the wavelength conversion efficiency is reduced with the increase in wavelength. Thus, the efficiency of converting the wavelength of 1554 nm into the wavelength of 777 nm is lowest. Therefore, this conversion is effected first of all to improve the efficiency.

As described above, in the configuration shown in Figs. 7B, 8, and 9, the simultaneous output of RGB is possible. Now, a method of switching the output of the RGB light source is explained.

In a case where the light source capable of generating the RGB light is used for laser display or the like, the power consumption can be reduced by switching the outputs of RGB. A method of switching the outputs is explained here. With regard to green light, the sum frequency ceases to be generated by stopping the generation of the fundamental wave in a neighborhood of 1540 nm (stopping the outputs of the second light sources 103, 104, and 302), and therefore the green light of 540 nm making up the SHG light of the fundamental wave having the wavelength of 1080 nm can be efficiently retrieved. In other words, the generation of green light can be switched by turning on/off the fundamental wave of 1540 nm.

The switching of blue and red, on the other hand, is made possible by a wavelength conversion element (such as the SHG element 505) for converting the fundamental wave having the wavelength of 1540 nm into the SHG light with the fundamental waves having the wavelength of 1540 nm and 1080 nm generated at the same time. By replacing the SHG element, applying an electric field or controlling the temperature and thus shifting the phase matching condition, the strength of generation of the SHG light of 770 nm can be controlled, thereby making it possible to switch blue and red. As long as the light of 770 nm is on (large in generation strength), the generation of blue in a neighborhood of 450 nm is strengthened, while as long as the light of 770 nm is off (small in generation strength), on the other hand, the generation of red having the wavelength in a neighborhood of 640 nm is strengthened. This method makes possible the strength switching of RGB and the adjustment for balancing the output. A similar method can be used for switching also in a case where only the light of two colors such as red/green, blue/green or red/blue of RGB are generated.

Further, by using the polarization inversion structure, the two second harmonic generating elements and the two sum frequency generating elements required for RGB generation can be formed in monolithic form on a single substrate, thereby simplifying and reducing the size of the light source.

In a case where the light source according to the invention is used as a RGB light source for color display, the RGB are desirably output by being switched. A color image can be configured by switching the image of each of R, G and B temporally. In this case, with regard to the light source, the conversion to the color image is made possible using a single image conversion element making up an image conversion unit by switching the RGB output.

In the configuration according to the invention, the switching of the generation of the light of 1554 nm is such that in a case where the light of 1554 nm is on, the RGB are output at the same time, while in a case where it is off, only the green of 542 nm is output. In this way, by switching the output of the light source, an image can be output efficiently.

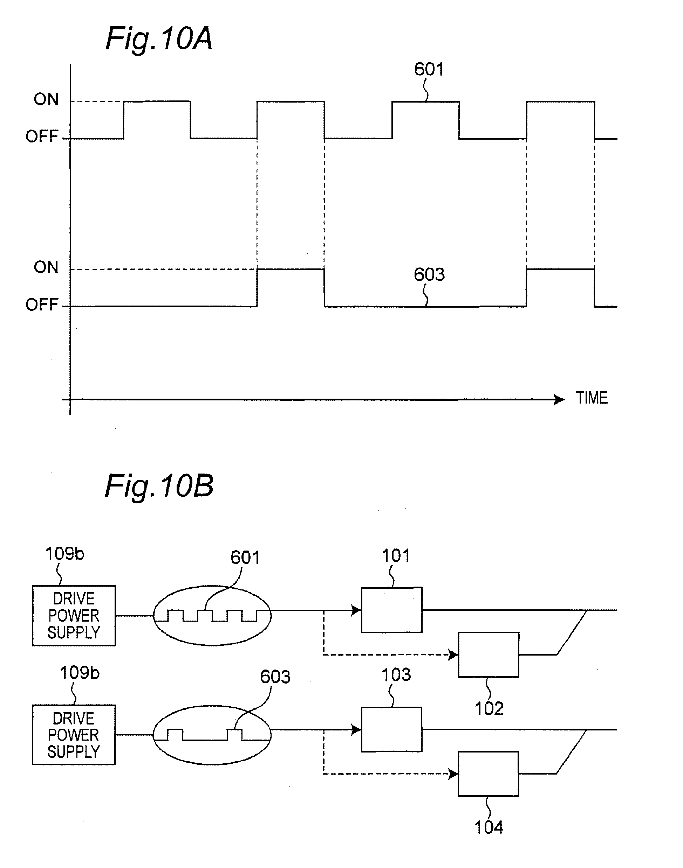

Further, in a case where a color image is formed, the greatest brightness of green is considered necessary. Fig. 10A shows an example 601 of an on/off pattern of the first light source unit 101, 102, and 301, and an example 603 of an on/off pattern of the second light source unit 103, 104, and 302. Fig. 10B is a diagram of the manner in which the two drive power supplies 109b drive the master light source 101 or the pump light source 102 with the pattern 601 and the master light source 103 or the pump light source 104 with the pattern 603. By driving the two light source units in this way, the two light source units are both kept on while the patterns 601 and 603 are on at the same time, thereby making possible simultaneous light emission of RGB. As long as the pattern 601 is off and the pattern 603 is on, on the other hand, only the green light can be emitted. By switching between the simultaneous generation of RGB and the generation of green alone in the configuration according to the invention, therefore, the accumulated light quantity of green is increased and an image of a higher brightness can be realized.

Further, in a case where the light source of 1554 nm is turned on/off to switch the output, the configuration of Fig. 9, as compared with the configuration of Fig. 8, can produce the green light more efficiently. In a case where the output of the light of 1554 nm is turned off, the light of 1084 nm ceases to be converted by intermediate elements and reaches the SHG element 517 directly. As a result, the conversion loss of the light of 1084 nm is reduced and the generation of green light with high efficiency is made possible by the SHG element 517. In a case where the output of the light of 1554 nm is turned on, on the other hand, B and R can be output before generation of green light, and therefore the highly efficient wavelength conversion is made possible for a higher utilization factor of the light sources. For the reason described above, the green light can be retrieved more efficiently in a case where the fundamental waves are output by being switched.

A similar advantage can be used also in Fig. 7B. By arranging the SHG element 403 for green generation in the last stage, the efficiency of green generation can be improved in a case where the RGB simultaneous generation and the green light generation are switched by switching the output of 1064 nm and 1554 nm.

### (Third embodiment)

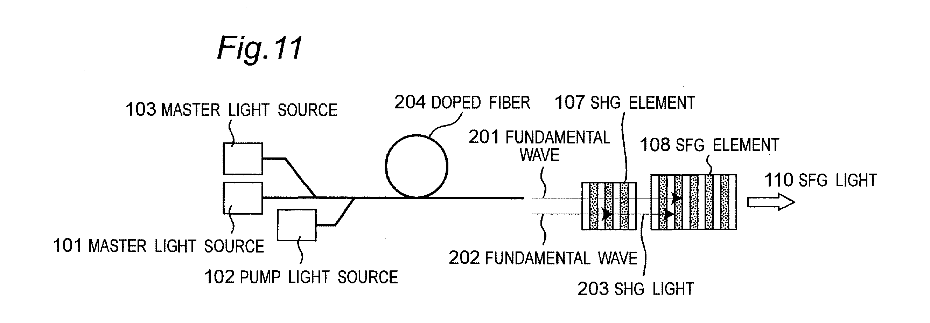

Now, a light source having a configuration with the fiber amplifiers (the pump light sources and the doped fibers) used in a monolithic structure is explained. According to this embodiment, the doped fiber 204 doped with Er and Yb at the same time is used as a fiber amplifier. The doped fiber 204, by being pumped with the pump light source 102 having the wavelength of 975 nm or 915 nm, can function as a fiber amplifier. This fiber amplifier performs the amplification operation in the wavelength region in a neighborhood of 1540 nm and in a neighborhood of 1080 nm. When the light is input to this fiber amplifier from the master light sources 101 and 103, the wavelength of the master light source is amplified by the doped fiber 204. Assuming that the master light source 101 has the wavelength in a neighborhood of 1080 nm and the master light source 103 has the wavelength in a neighborhood of 1540 nm, for example, the light of different wavelengths can be oscillated by the single doped fiber 204. In the configuration of Fig. 11, the light of the wavelengths of 1540 nm and 1080 nm can be emitted at the same time from the doped fiber 204 by emitting the light from the master light sources 103 and 101 at the same time. Then, by wavelength conversion by the SHG element 107 and the SFG element 108, the blue SFG light 110 can be generated with the configuration of the wavelength conversion elements described in the first embodiment. The integration of the fiber laser eliminates the need of the optical system for combining the laser light from the fibers, and the optical system can be simplified and reduced in size and cost.

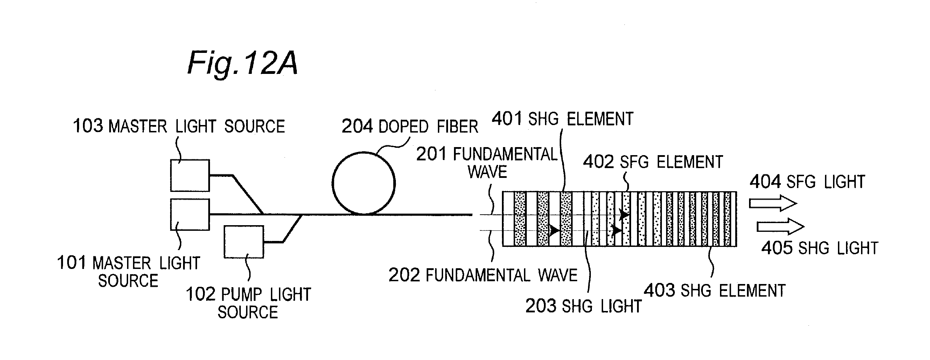

Further, this can be used for generating the green light. Fig. 12A shows a coherent light source having another configuration according to the invention. The SHG element 403 is added to the aforementioned configuration, and the fundamental wave 201 having the wavelength of 1080 nm is converted into the green light 405 having the wavelength of 540 nm. The light source having this configuration can generate the blue light and the green light at the same time. Further, since the two lights are generated along the same axis, the optical system using the laser light is effectively simplified to a great degree.

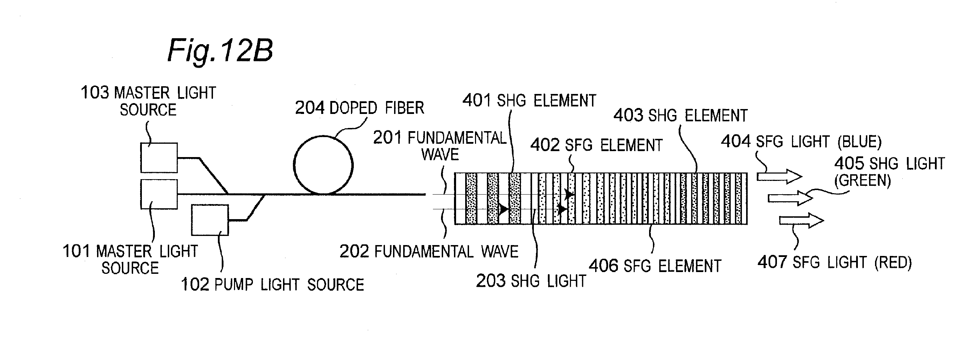

Fig. 12B is a diagram of a configuration of the light source having a wavelength conversion element in which the SFG element 406 is further added to a part of the wavelength conversion element making up the light source shown in Fig. 12A. With this configuration, as described above, the light source is formed in which the RGB light can be emitted at the same time.

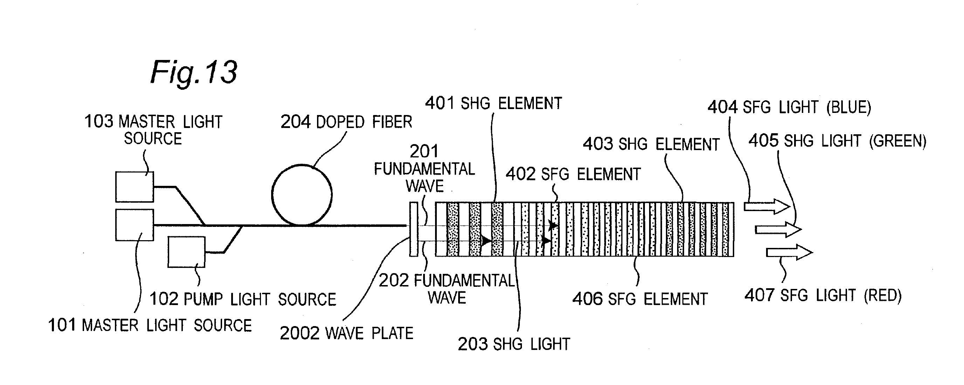

Fig. 13 is a diagram of the configuration of the light source having a wave plate 2002. In the light source having this configuration, the Er/Yb-doped fiber 204 generates the light of 1064 nm and 1550 nm at the same time, which are converted into the three colors of RGB by the elements 401, 402, 403, and 406 making up the wavelength conversion element unit. The two wavelengths are generated at the same time by the fiber laser 204, and therefore the gain by the pump laser is scrambled for by the oscillation of two wavelengths, thereby sometimes instabilizing the oscillation. As a method of preventing this, the directions of polarization of the light from the two master light sources 101 and 103 are desirably crossed each other at right angles to prevent the mutual interference. In this configuration, the fiber 204 is desirably a polarization-maintaining fiber. This is by reason of the fact that it is desirable that two orthogonal polarized lights do not interfere with each other. By inputting the light from the master light sources 101 and 103 as mutually orthogonal polarized light, the light of 1550 nm and 1064 nm are oscillated as mutually orthogonal polarized light, thereby stabilizing the output. In view of the fact that the two light are required to be polarized in the same way when being input to the wavelength conversion element, however, the wave plate 2002 is inserted between the light source unit and the wavelength conversion unit so that the polarized light of two wavelength are converted into the same polarized light and enter the wavelength conversion element.

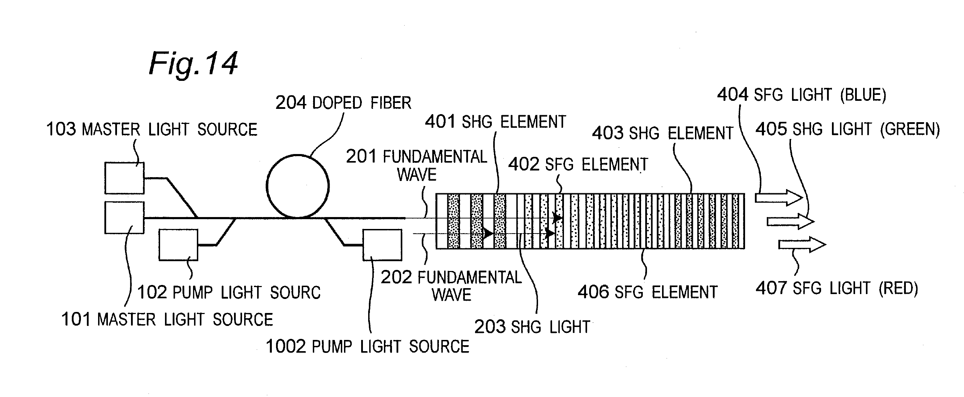

Fig. 14 is a diagram of the configuration of the light source using two pump light sources of different wavelengths. The pump light source 102 has the wavelength of 915 nm and the pump light source 1002 the wavelength of 1480 nm. Although the pump light source 102 excites the light emission gain of both 1550 and 1064 nm, the light of 1480 nm excites only the light of 1550 nm. By controlling the power of the pump light sources 102, 1002, therefore, the generation of the light of the wavelength of 1064 nm and 1550 nm is controlled to assure stability.

Incidentally, for the wavelength of the pump light source 1002, the region of 920 to 970 nm other than 1480 nm can also be used.

Incidentally, by using the polarization-maintaining fiber as the fiber 204 and separating the polarized light of two wavelengths of 1550 and 1064 nm from each other, the stable generation of two wavelengths is made possible.

The configuration according to the invention uses two master laser having different wavelengths as the fiber exited by the pump laser. Nevertheless, the configuration including a master laser for emitting the light of still different wavelength can also be effectively employed. In addition to the light source for generating the light of the wavelength of 1080 nm, for example, a light source for generating the light of the wavelength of 1040 nm and a wavelength conversion element for receiving the light of the wavelength of 1040 nm and generating the second harmonic are added. In this way, the SHG light of the wavelength of 520 nm can be additionally generated. By increasing the types of the wavelength of the light generated by the master light sources, the types of the wavelength of the light that can be emitted from these light sources can be increased. Thus, by switching the wavelength of the light generated by the master light sources, the wavelength of the light generated can be switched. In a case where the wavelength of the light generated by the light sources can be switched in a variety of ways, the color range that can be displayed on the display unit can be enlarged in an application as a light source of the display unit.

Incidentally, this embodiment has a configuration for amplifying the light of the master laser by the fiber. The invention, however, is not limited to such a configuration and includes a configuration in which the laser is oscillated by the resonator using the fiber grating. This resonator is configured to have fiber grating at two mutually distant points on the fiber laser, and the light can be resonated between these fiber gratings. As a result, the laser of two wavelengths can be oscillated by the pump laser alone. In a case where the laser is oscillated using this grating, the master light source is not required, and the configuration of this light source can be effectively simplified and reduced in cost. These fiber gratings desirably have a grating structure having such different periods that Bragg reflection occurs with two desired different wavelengths. In a case of the fiber laser having the resonant structure, it is desirable to employ the configuration in which the light of different wavelengths is excited in different directions of polarization using the polarization-maintaining fiber. Upon excitation of two wavelengths in a single fiber, the fiber gain may be scrambled for. By excitation in different directions of polarization, however, the scramble for the gain can be suppressed and two wavelengths having a stable output can be oscillated.

Further, as described later, the coherent light source according to the invention can be used advantageously also for the laser display device. One of the reasons is that the optical axes of the light sources coincide with each other. The coincident optical axes simplify the optical system making up the display using the RGB light source. Another point is that in a laser display configuration using the light sources of the three primary colors of RGB (red, blue and green), the utilization factor of the laser as light sources can be improved by simultaneous generation and by independent and alternate light emission. Also, in a case of image conversion using the DMD or reflection-type liquid crystal panel, a single panel can be used by switching the RGB light, thereby reducing the size and cost. The configuration according to the invention effectively achieves this sequential turning on. In a case where the output of the light sources is modulated by an external modulator, the light of the three primary colors of RGB are continuously oscillated, and therefore the power consumption three times as large as the sequential turning on is required. In a case where blue and green are sequentially turned on according to the invention, the first step is to stop the master light source 103 having the wavelength in a neighborhood of 1540 nm to emit the green light. Then, only the light in a neighborhood of 1080 nm is emitted from the fiber, and only the SHG light of green color having the wavelength of 540 nm is emitted. Also, in a case where blue light is emitted, the master light sources 101 and 103 are turned on at the same time. In this case, it is difficult to emit only the blue light. By improving the conversion efficiency of the SFG element 402, however, the generation of the green light can be greatly reduced. The generation of blue and green light can be switched by switching the master light sources 101 and 103, and therefore the sequential turning on of blue and green is made possible thereby to reduce the power consumption remarkably.

### (Fourth embodiment)

Now, a laser display making up an optical apparatus using a coherent light source of a present embodiment according to the invention is explained.

The display of high color reproducibility can be realized by use of the RGB laser. Although the red semiconductor laser of a high output has been developed as a laser light source, the high output for blue has yet to be realized, and with regard to green, the semiconductor laser is difficult to form. Thus, the green and blue light sources using the wavelength conversion are required. The coherent light source according to the invention can be easily produced with a high output using the fiber laser, and therefore can realize the laser display having a large screen. As a light source using the fiber laser, the light source for generating the green and blue light or the red, green and blue light at the same time can be used.

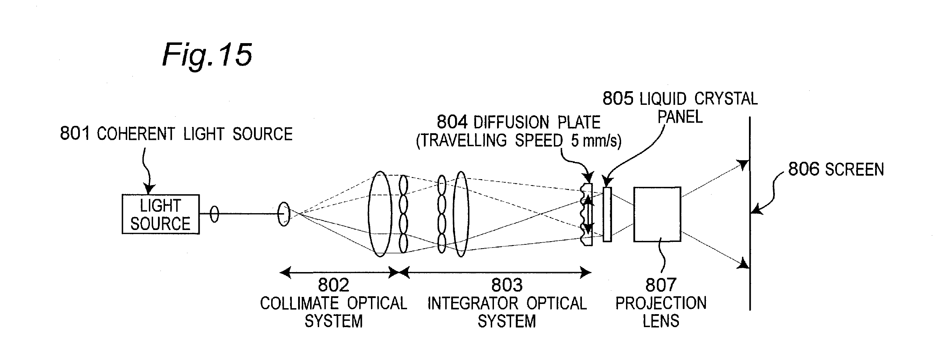

Fig. 15 is a diagram of the configuration of the laser display having a light source 801 for projecting an image on the screen by controlling the two-dimensional light strength distribution by a liquid crystal panel, i.e. an image conversion unit making up a two-dimensional switch, i.e. by image conversion. The light emitted from the coherent light source 801 is passed through a collimate optical system 802, an integrator optical system 803 and a diffusion plate 804, after which the image conversion is effected by a liquid crystal panel 805, and the image is projected on the screen by a projection lens 807. The diffusion plate is relocated by a swinging mechanism, so that the speckle noises generated on the screen are reduced. The coherent light source according to the invention can produce a stable output against the external temperature change, and therefore a stable image can be realized with a high output. Also, the high beam quality facilitates the design of the optical system and can reduce the size and simplify the device.

Incidentally, as a two-dimensional switch, the reflection-type liquid crystal switch, DMD mirror, etc. can be used other than the liquid crystal panel.

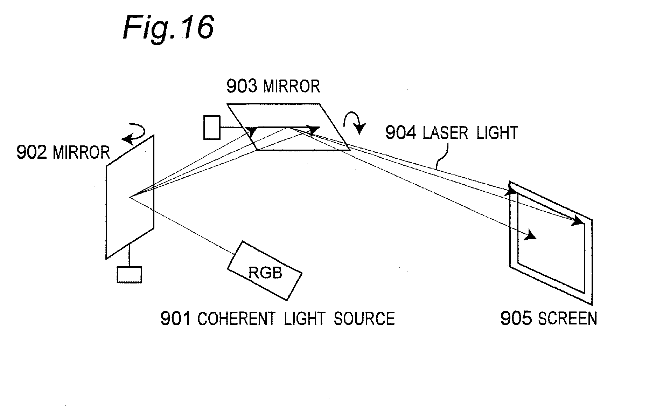

As a laser display apparatus according to the invention, the method shown in Fig. 16 is also effective. The laser light emitted from the coherent light source 901 is scanned by mirrors 902 and 903 thereby to draw a two-dimensional image on the screen. In this case, the laser light source is better equipped with a high-speed switching function. The coherent light source 901 according to any of the embodiments of the invention can produce a high output and is superior in that it can produce a stable output. Also, without a temperature control element or by simple temperature control, a stable output can be obtained.

Also, the beam quality is so high that the scanning optical system can be reduced in size and simplified. Further, a small-sized scanning device using MEMS can be used as a beam scanning optical system. The high beam quality is accompanied by a superior focusing characteristic and collimate characteristic, and the small mirror such as MEMS can be used. As a result, the scanning-type laser display can be realized.

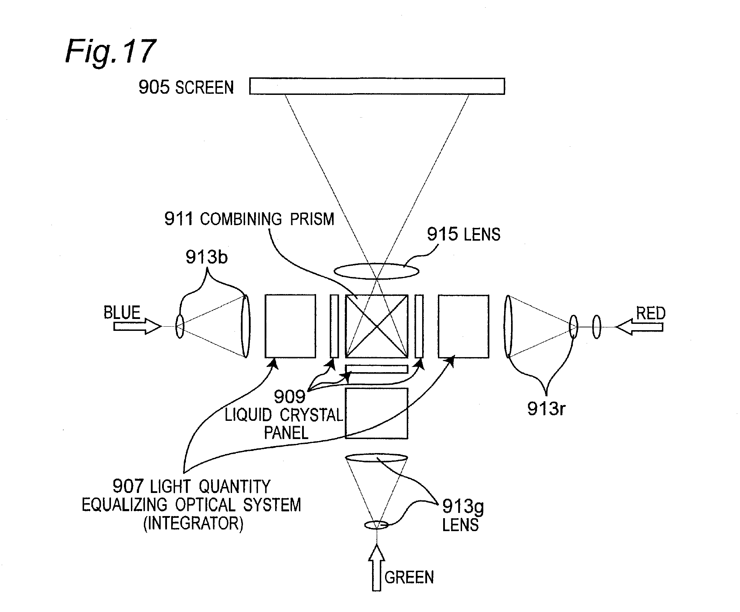

Also, the method shown in Fig. 17 is effective as the laser display apparatus according to the invention. The light of the three colors R, G, B, not shown, emitted from the coherent light source according to the invention are enlarged by entering lenses 913r, 913g, and 913b, respectively, and after passing through a light quantity equalizing optical system (integrator) 907, converted into an image by a liquid crystal panel 909 making up a two-dimensional switch. Then, the light passes through a combining prism 911 and a lens 915, and the image is projected on the screen 905.

Incidentally, in a case where the coherent light source according to the invention is used for the display apparatus, speckle noises may be caused depending on the degree of coherence of the laser light. The speckle noises are generated by mutual interference of the laser light reflected on the screen, etc. and reduce the image quality. Therefore, the coherence of the light generated by the light source is desirably reduced.

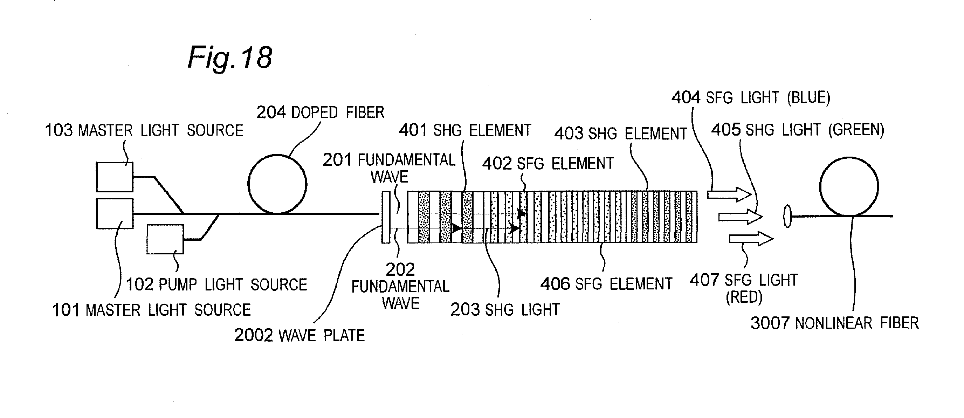

Fig. 18 shows a configuration in which a nonlinear fiber 3007 is added to the coherent light source according to the invention. The RGB light emitted from the wavelength conversion element are coupled and guided by the nonlinear fiber 3007. The light guided by the nonlinear fiber 3007 generates the Raman scattering due to the nonlinear effect and the oscillation spectrum is enlarged. The laser light, before entering the wavelength conversion element unit 401, 402, 403, 406, etc. desirably has the narrow band characteristic of about 0.1 to 0.2 nm to improve the conversion efficiency. The light emitted from the wavelength conversion element unit 401, 402, 403, 406, etc., however, is desirably enlarged in spectrum to about 10 nm by the nonlinear fiber 3007 thereby to reduce the coherence considerably. By adding the nonlinear fiber 3007 to part of the configuration of the light source in this way, the display having a high image quality free of speckle noises can be realized.

Although the laser display is described above as an optical apparatus, an application to an optical disc device or a measuring instrument is also effective. Demand exists for an improved laser output of the optical disc device by increasing the writing speed. Further, the laser light requires the focusing characteristic of the diffraction limit, and therefore, the single mode implementation thereof is essential. The light source according to the invention has a high output and a high coherence, and therefore finds effective applications to the optical disc, etc.

According to the invention, the configuration is used in which the pump lasers and the master light sources are used as the fiber lasers making up the light source unit. The fiber laser, however, can be configured of the grating fiber (Fig. 2) and the pump light source without using the master light source.

### Industrial Applicability

As described above, the coherent light source according to the invention is so configured that the blue light can be generated using the wavelength conversion. Especially, the laser light source using a fiber amplifier easy to produce a high output can produce the blue light of high output, and therefore, the practical effect thereof is high.

Further, blue and green can be generated or red, blue and green can be generated at the same time from the laser lights of two different wavelengths, and the output can be switched. Since the RGB light high in brightness can be produced with a single light source, the practical effect thereof is high.

Furthermore, the use of this coherent light source can realize a high-output compact RGB light source, and therefore applications to various optical devices such as the optical disc device as well as the laser display are made possible, resulting in a high practical effect.

## Claims

1. A coherent light source comprising:
a light source unit including a doped fiber that emits light of a first wavelength and light of a second wavelength from the doped fiber; and
a wavelength conversion element unit including a first wavelength conversion element that receives the light of the first wavelength and emits a light of a shorter wavelength than the first wavelength.

2. The coherent light source according to claim 1, wherein the first wavelength conversion element receives the light of the first wavelength and emits a second harmonic of the light of the first wavelength.

3. The coherent light source according to claim 2, wherein the wavelength conversion element unit further includes a second wavelength conversion element that receives the second harmonic of the light of the first wavelength and the light of the second wavelength and emits a light having a sum frequency of the second harmonic and the light of the second wavelength.

4. The coherent light source according to claim 1, wherein said light source unit includes a first doped fiber containing either Er or Er and Yb and a second doped fiber containing Yb.

5. The coherent light source according to claim 3,
wherein:
the first wavelength is approximately 1540 nm;
the second wavelength is approximately 1080 nm; and
said wavelength conversion element unit receives the light of the first wavelength and the light of the second wavelength and emits a light of a wavelength of approximately 450 nm.

6. The coherent light source according to claim 3,
wherein said wavelength conversion element unit further includes a third wavelength conversion element that receives the light of the second wavelength and emits a second harmonic of the light of the second wavelength.

7. The coherent light source according to claim 6,
wherein said wavelength conversion element unit further includes a fourth wavelength conversion element that receives the light of the first wavelength and the light of the second wavelength and emits a light having a sum frequency of the first wavelength and the second wavelength.

8. The coherent light source as set forth in claim 6,
wherein:
the first wavelength conversion element receives at least a part of the light of the first wavelength;
the second wavelength conversion element receives at least a part of a light emitted from the first wavelength conversion element and at least a part of the light of the second wavelength; and
the third wavelength conversion element receives at least a part of the light of the second wavelength.

9. The coherent light source according to claim 7,
wherein:
the first wavelength conversion element receives at least a part of the light of the first wavelength;
the second wavelength conversion element receives at least a part of a light emitted from the first wavelength conversion element and at least a part of the light of the second wavelength;
the third wavelength conversion element receives at least a part of the light of the second wavelength; and
the fourth wavelength conversion element receives at least a part of the light of the first wavelength and at least a part of the light of the second wavelength.

10. The coherent light source according to claim 3,
wherein at least one of the first wavelength conversion element and the second wavelength conversion element includes at least one of Mg-doped LiNbO3, Mg-doped LiTaO3, and KTiOPO4, Mg-doped LiNbO3 of stoichiometric composition and Mg-doped LiTaO3 of stoichiometric composition having a periodic polarization inversion structure.

11. The coherent light source according to claim 1,
wherein said light source unit further includes a master light source that generates a light entering the doped fiber.

12. The coherent light source according to claim 11,
wherein said light source unit is capable of being connected with a drive unit that supplies pulse-like energy for driving said light source unit.

13. The coherent light source according to claim 12,
wherein:
said light source unit includes two doped fibers and two master light sources; and
the two master light sources are capable of being connected with the drive unit and operate while receiving supplies of pulse-like energy having same period and same phase.

14. The coherent light source according to claim 1, wherein the doped fiber contains at least one of the elements of Yb, Er, Er/Yb, Nd, Pr, Cr, Ti, V and Ho.

15. The coherent light source according to claim 3, wherein the first wavelength conversion element and the second wavelength conversion element have a single nonlinear optical crystal structure.

16. The coherent light source according to claim 1, wherein said light source unit includes a single doped fiber.

17. The coherent light source according to claim 16,
wherein the doped fiber is an Er/Yb-doped fiber.

18. The coherent light source according to claim 13, wherein at least one of the two master light sources is a semiconductor laser light source.

19. The coherent light source according to claim 1 further comprising an optical fiber that receives light emitted from said wavelength conversion element unit.

20. An optical apparatus comprising:
a coherent light source including a light source unit having a doped fiber that emits a light of a first wavelength and a light of a second wavelength from the doped fiber, and a wavelength conversion element unit having a first wavelength conversion element that receives the light of the first wavelength and emits a light of a shorter wavelength than the first wavelength; and
an image conversion unit that receives the light emitted from said coherent light source and controls two-dimensional strength distribution of the light emitted from said coherent light source.

## Amended claims

### Amended claims under Art. 19.1 PCT

**1.** (Amended) A coherent light source comprising:
a light source unit including a single doped fiber that emits light of a first wavelength and light of a second wavelength from the doped fiber; and
a wavelength conversion element unit including a first wavelength conversion element that receives the light of the first wavelength and emits a light of a shorter wavelength than the first wavelength.

**2.** The coherent light source according to claim 1, wherein the first wavelength conversion element receives the light of the first wavelength and emits a second harmonic of the light of the first wavelength.

**3.** The coherent light source according to claim 2, wherein the wavelength conversion element unit further includes a second wavelength conversion element that receives the second harmonic of the light of the first wavelength and the light of the second wavelength and emits a light having a sum frequency of the second harmonic and the light of the second wavelength.

**4.** (Cancelled)

**5.** The coherent light source according to claim 3,
wherein:
the first wavelength is approximately 1540 nm;
the second wavelength is approximately 1080 nm; and
said wavelength conversion element unit receives the light of the first wavelength and the light of the second wavelength and emits a light of a wavelength of approximately 450 nm.

**6.** The coherent light source according to claim 3,
wherein said wavelength conversion element unit further includes a third wavelength conversion element that receives the light of the second wavelength and emits a second harmonic of the light of the second wavelength.

**7.** The coherent light source according to claim 6,
wherein said wavelength conversion element unit further includes a fourth wavelength conversion element that receives the light of the first wavelength and the light of the second wavelength and emits a light having a sum frequency of the first wavelength and the second wavelength.

**8.** The coherent light source as set forth in claim 6,
wherein:
the first wavelength conversion element receives at least a part of the light of the first wavelength;
the second wavelength conversion element receives at least a part of a light emitted from the first wavelength conversion element and at least a part of the light of the second wavelength; and
the third wavelength conversion element receives at least a part of the light of the second wavelength.

**9.** The coherent light source according to claim 7,
wherein:
the first wavelength conversion element receives at least a part of the light of the first wavelength;
the second wavelength conversion element receives at least a part of a light emitted from the first wavelength conversion element and at least a part of the light of the second wavelength;
the third wavelength conversion element receives at least a part of the light of the second wavelength; and
the fourth wavelength conversion element receives at least a part of the light of the first wavelength and at least a part of the light of the second wavelength.

**10.** The coherent light source according to claim 3, wherein at least one of the first wavelength conversion element and the second wavelength conversion element includes at least one of Mg-doped LiNb03, Mg-doped LiTa03, and KTiOP04, Mg-doped LiNb03 of stoichiometric composition and Mg-doped LiTa03 of stoichiometric composition having a periodic polarization inversion structure.

**11.** The coherent light source according to claim 1, wherein said light source unit further includes a master light source that generates a light entering the doped fiber.

**12.** The coherent light source according to claim 11, wherein said light source unit is capable of being connected with a drive unit that supplies pulse-like energy for driving said light source unit.

**13.** (Amended) The coherent light source according to claim 12, wherein:
said light source unit includes two master light sources; and
the two master light sources are capable of being connected with the drive unit and operate while receiving supplies of pulse-like energy having same period and same phase.

**14.** The coherent light source according to claim 1, wherein the doped fiber contains at least one of the elements of Yb, Er, Er/Yb, Nd, Pr, Cr, Ti, V and Ho.

**15.** The coherent light source according to claim 3, wherein the first wavelength conversion element and the second wavelength conversion element have a single nonlinear optical crystal structure.

**16.** (Cancelled)

**17.** The coherent light source according to claim 1, wherein the doped fiber is an Er/Yb-doped fiber.

**18.** The coherent light source according to claim 13, wherein at least one of the two master light sources is a semiconductor laser light source.

**19.** The coherent light source according to claim 1 further comprising an optical fiber that receives light emitted from said wavelength conversion element unit.

**20.** (Amended) An optical apparatus comprising:
a coherent light source including a light source unit having a single doped fiber that emits a light of a first wavelength and a light of a second wavelength from the doped fiber, and a wavelength conversion element unit having a first wavelength conversion element that receives the light of the first wavelength and emits a light of a shorter wavelength than the first wavelength; and
an image conversion unit that receives the light emitted from said coherent light source and controls two-dimensional strength distribution of the light emitted from said coherent light source.

**21.** (Newly Added) The coherent light source according to claim 11, wherein said light source unit includes two master light sources, and directions of polarization of the light of the two master light sources cross at right angles each other.

**22.** (Newly Added) The coherent light source according to claim 21,
wherein:
a wave plate is inserted between said light source unit and said wavelength conversion element unit; and
the wave plate converts the light into polarized light which has a single polarization direction.
